# FASCICULE DE BREVET EUROPEEN

(11) **EP 2 147 253 B1**
(45) Date de publication et mention de la délivrance du brevet: **05.09.2018**
(21) Numéro de dépôt: 08788133.0
(22) Date de dépôt: 07.04.2008
(51) Int. Cl.: F23C 3/00, F23C 7/04, F23D 14/22, F23D 14/58, F23D 14/78, F23L 9/00, F23M 5/08, C03B 37/04, F23C 7/00, F23D 99/00

(54) **BRULEUR A COMBUSTION INTERNE**
BRENNER MIT INNERER VERBRENNUNG
INTERNAL COMBUSTION BURNER

(30) Priorité: 12.04.2007 FR 0754402
(43) Date de publication de la demande: 27.01.2010
(73) Titulaire: Saint-Gobain Isover, 92400 Courbevoie (FR)
(72) Inventeur: BOULANOV, Oleg, 60180 Nogent Sur Oise (FR); ELLISON, Christopher, 76119 Varengeville Sur Mer (FR)
(74) Mandataire: Saint-Gobain Recherche
(86) Numéro de dépôt international: PCT/FR2008/050610
(87) Numéro de publication internationale: WO 2008/139104

(56) Documents cités:
- EP-A- 0 091 380
- EP-A- 1 801 497
- FR-A- 2 379 028
- GB-A- 1 205 897
- US-A- 2 800 175
- US-A- 3 327 503
- US-A1- 2003 200 752
- US-B1- 6 381 964

## Description

L'invention concerne un brûleur à combustion interne, apte à produire des courants gazeux à haute température et à grande vitesse. Plus particulièrement, l'invention s'intéresse aux brûleurs que l'on utilise dans les procédés de formation de fibres minérales et dans lesquels l'étirage des fibres résulte des courants gazeux émis par lesdits brûleurs seuls, ou en combinaison avec d'autres moyens tels que des moyens de centrifugation ou des moyens d'étirage du type filière.

Le procédé de fibrage couramment utilisé pour de la fibre de verre est le procédé dit par centrifugation interne. Il consiste à introduire un filet de la matière étirable à l'état fondu dans un centrifugeur, encore appelé assiette de fibrage, tournant à grande vitesse et percé à sa périphérie par un très grand nombre d'orifices par lesquels la matière est projetée sous forme de filaments sous l'effet de la force centrifuge. Au moyen d'un brûleur annulaire, ces filaments sont alors soumis à l'action d'un courant annulaire gazeux d'étirage à température et vitesse élevées (plus de 1000°C pour la température, et 250 m/s environ pour la vitesse) longeant la paroi du centrifugeur qui les amincit et les transforme en fibres. On peut se reporter, pour plus de détails sur des procédés de fibrage utilisant le procédé par centrifugation interne aux demandes de brevet WO 99/65835 et WO 97/15532.

Le procédé de fibrage couramment utilisé pour de la fibre de roche est le procédé dit par centrifugation externe. La matière à fibrer est déversée à l'état fondu sur la bande périphérique de roues de centrifugation mues en rotation, est accélérée par ces roues, s'en détache et est transformée pour partie, en fibres sous l'effet de la force centrifuge, un courant gazeux étant émis tangentiellement à la bande périphérique des roues de manière à prendre en charge la matière fibrée en la séparant de la matière infibrée et à l'acheminer vers un organe récepteur. On peut par exemple se reporter, pour un fibrage par centrifugation externe à la demande de brevet EP 195 725.

Dans ce procédé de fibrage par centrifugation externe, le courant gazeux tangentiel émis à la périphérie des roues de centrifugation est généralement constitué par un courant d'air froid ou de fumées refroidies à une température voisine de la température ambiante (20 à 40°C), avec une vitesse moyenne de 100 m/s par exemple. Cependant, en raison du gradient important de température entre la température des fibres à l'éjection des roues (de l'ordre de 1000°C) et la température froide du courant gazeux arrivant sur les fibres, la qualité d'étirage des fibres s'en ressent.

Pour améliorer de manière très significative la qualité des fibres produites par une telle installation, avec notamment une plus grande finesse et par ailleurs un taux de grains de matière infibrée plus faible (le terme "grains" étant utilisé pour désigner les particules supérieures à 100 microns qui se retrouvent dans le produit final), on a mis en évidence l'intérêt de souffler un courant gazeux plus chaud. C'est en particulier l'objet du brevet EP 465 310 qui propose d'utiliser un courant gazeux dont la température est comprise entre 250 et 900°C, de préférence entre 300 et 600°C, et de préférence encore autour de 500°C.

Par ailleurs, on peut par exemple se référer à la demande de brevet EP 0 091 380 sur la réalisation d'un brûleur standard à combustion interne, qui est par contre généralement utilisé pour le procédé par centrifugation interne.

La paroi extérieure de la chambre de combustion d'un tel brûleur nécessite toutefois d'être refroidie, et la mise en place de moyens adaptés de refroidissement telle que l'addition d'un matériau réfractaire d'épaisseur non négligeable, ou l'association d'une boîte à eau autour de la chambre, ne participe pas à une optimisation de l'encombrement du brûleur intégrant ses moyens de refroidissement.

En particulier, un tel brûleur reste trop volumineux pour être logeable dans l'encombrement réduit d'un système de soufflage d'un courant gazeux qui doit être agencé dans un dispositif par centrifugation externe.

L'invention a donc pour but de proposer un brûleur à combustion interne fournissant de l'air chaud (700 à 1700°C) qui présente des moyens de refroidissement limitant le rayonnement de chaleur depuis ses parois, le brûleur étant de faible encombrement, avec de préférence une limitation dimensionnelle selon une des extensions de l'ordre de 5 cm.

Selon l'invention, le brûleur à combustion interne comporte une chambre de combustion alimentée en combustible et en comburant, la chambre comportant une enveloppe pourvue d'une première extrémité fermée et d'une seconde extrémité opposée d'échappement ouverte par laquelle s'échappent les gaz de combustion, l'enveloppe présentant au moins deux parois opposées qui relient les deux extrémités, le brûleur étant caractérisé en ce qu'il comporte dans la chambre et au niveau de la première extrémité fermée, au moins deux dispositifs de combustion alimentés en comburant et en combustible, qui sont distincts en configuration de manière à engendrer respectivement deux types distincts de flammes, et en ce qu'il est doté d'un système de refroidissement de ses parois par introduction d'un gaz de refroidissement tel que de l'air le long desdites parois.

La présence de deux dispositifs de combustion différents engendrant deux types distincts de flammes permet d'assurer en permanence une flamme courte et stable dans le brûleur.

En effet, lorsque l'un des dispositifs de combustion est configuré pour assurer une flamme courte mais qui est peu stable à certains régimes, le deuxième dispositif de combustion peut être par conséquent configuré pour assurer l'allumage permanent du premier dispositif. Le deuxième dispositif présente plutôt une flamme longue et molle qui elle, est stable à tous régimes.

Par ailleurs, le dispositif de combustion qui fournit une flamme longue et molle peut interagir avec plusieurs dispositifs produisant une flamme courte, permettant d'assurer une combustion complète dans un faible encombrement ainsi qu'une répartition homogène de la chaleur à l'intérieur du brûleur, ce qui serait sinon impossible avec un seul dispositif de combustion pour lequel sa flamme pourtant stable serait trop longue, conduisant à une inhomogénéité de la chaleur (très chaud au milieu et froid latéralement) et sortirait du brûleur sans que la combustion soit donc achevée à l'intérieur dudit brûleur.

Enfin, le système de refroidissement permet d'introduire un gaz de refroidissement le long des parois du brûleur sous forme d'un rideau qui isole les faces internes des parois du brûleur. Ce système constitue une protection thermique efficace de l'enveloppe de la chambre de combustion sans engendrer de moyens imposants de refroidissement.

Le système de refroidissement comprend une multitude d'orifices qui traversent les parois du brûleur et par lesquels de l'air est destiné à s'engouffrer, ainsi que des lamelles de déflexion internes à la chambre de combustion qui ménagent chacune, d'une part, une cavité qui est en regard de plusieurs orifices et qui est destinée à recevoir l'air en provenance desdits orifices, et d'autre part, une fente de guidage qui est destinée à conduire l'air de la cavité vers l'intérieur de la chambre.

Selon une caractéristique, les parois de la chambre présentent sur leur face externe, à l'extérieur de la chambre à combustion, une pluralité de décrochements qui s'étendent selon la plus petite extension de la paroi et au niveau desquels sont agencés les orifices traversants.

Sont ménagés entre les décrochements, des paliers qui présentent une configuration en épi et dont l'obliquité est en direction de l'extrémité d'échappement du brûleur.

Les cavités distribuées ainsi le long des parois, du côté de l'intérieur de la chambre et délimitées par les paliers obliques et les lamelles de déflexion permettent de créer à l'intérieur des cavités une turbulence de l'air entrant par les orifices traversants et dirigés vers les fentes de guidage. Ces turbulences d'air assurent le refroidissement des lamelles de déflexion en contact direct avec l'intérieur de la chambre dans laquelle la combustion, donc le dégagement de chaleur, a lieu.

En outre, les fentes de guidage par lesquelles sort l'air des cavités, participent également au refroidissement direct de l'intérieur de la chambre.

Les lamelles de déflexion présentent avantageusement une orientation adaptée, telle que coplanaire avec les faces internes des parois, de sorte que l'air issu des fentes de guidage présente un flux directionnel sensiblement parallèle aux parois de la chambre, garantissant un refroidissement optimum.

A noter que le nombre d'orifices et leur taille, et par conséquent la surface de passage de l'air au travers des parois, sont adaptés en fonction notamment de l'épaisseur des parois et de la hauteur du brûleur afin de refroidir correctement les parois du brûleur. En particulier, on pourra agrandir la taille des orifices à proximité des dispositifs de combustion lorsque l'on augmente les dimensions de ces derniers.

Selon l'invention, chaque dispositif de combustion comprend un corps qui présente une première face et une seconde face opposée à la première et en regard de la combustion, le corps étant traversé dans son épaisseur et d'une face à l'autre par plusieurs conduits d'alimentation en comburant et d'un conduit d'alimentation en combustible d'axe Y perpendiculaire aux faces du corps, le conduit d'alimentation en combustible étant disposé de manière centrale vis-à-vis des conduits d'alimentation en comburant et comprenant un prolongement faisant saillie par rapport à la seconde face du corps et aux conduits d'alimentation en comburant, la partie en saillie étant pourvu d'une pluralité d'orifices.

Selon un mode de réalisation de dispositif de combustion, le corps comporte un rempart périphérique qui fait saillie par rapport à la seconde face du corps de manière à encadrer en partie ou totalement les sorties des conduits d'alimentation en comburant.

Selon ce même mode de réalisation, pour l'un des dispositifs de combustion, les conduits sont inclinés par rapport à l'axe Y du conduit central et chaque conduit d'alimentation en comburant comporte une entrée au niveau de la première face du corps du dispositif et une sortie débouchant au niveau de la surface de la deuxième face du corps du dispositif, les entrées et les sorties des conduits étant agencées selon des cercles de diamètre identique autour du conduit d'alimentation en comburant.

Selon un autre mode de réalisation de dispositif de combustion, pour l'un des dispositifs de combustion, les conduits d'alimentation en comburant sont inclinés par rapport à l'axe Y du conduit central d'alimentation en combustible, et chaque conduit comporte une entrée au niveau de la première face du corps du dispositif et une sortie débouchant au niveau de la surface de la deuxième face du corps du dispositif, les entrées et les sorties des conduits étant agencées selon des cercles de diamètre différent autour du conduit d'alimentation en comburant, le cercle formé par les sorties étant de diamètre plus petit.

Les dispositifs de combustion sont disposés de manière sensiblement linéaire pour une enveloppe de brûleur qui est de forme sensiblement parallélépipédique, ou sont disposés de manière circulaire pour une enveloppe de brûleur qui est de forme annulaire. On entend par sensiblement linéaire, une disposition qui présente une direction générale linéaire, pouvant être parfaitement alignée, ou non alignée telle qu'en quinconce.

Selon une caractéristique, le comburant est formé d'air sous pression, tandis que le combustible est constitué d'un gaz par exemple ou d'un mélange de gaz.

Selon une autre caractéristique, les parois du brûleur sont avantageusement espacées d'au plus 5 cm.

L'enveloppe du brûleur est de préférence métallique.

Le brûleur est destiné à être agencé dans un espace fermé constitué par une enveloppe hermétique qui comporte au moins une entrée d'alimentation d'air sous pression et est traversée par des tuyaux d'alimentation en combustible connectés aux dispositifs de combustion. L'enveloppe hermétique peut le cas échéant être constituée au moins en partie par des éléments constitutifs de l'installation existante de fabrication de laine minérale, par exemple le carter de la machine pour la fabrication de laine de roche.

Le brûleur de l'invention est par exemple utilisé dans une installation de fibrage de laine minérale, en particulier de roche ou de verre. Une telle installation peut bien entendu être équipée d'une pluralité de brûleurs.

Enfin, l'invention est relative à un procédé de fabrication de laine minérale par un dispositif de centrifugation externe ou interne, en particulier de forme standard, qui utilise au moins un brûleur de l'invention. On entend par dispositif de forme standard un dispositif présentant une configuration et des dimensions qui sont celles habituelles dans les installations déjà existantes. Le brûleur de l'invention est ainsi adapté à être logé dans un dispositif existant.

Selon une caractéristique du procédé, on produit à l'intérieur du brûleur un premier type de flamme instable à certains régimes, et un deuxième type de flamme assurant un allumage permanent du premier type de flamme.

Selon une autre caractéristique, on fournit un gaz de refroidissement pour refroidir les parois du brûleur qui est constitué par de l'air sous pression.

D'autres détails et avantages de l'invention vont à présent être décrit, en regard des dessins annexés sur lesquels :
- la figure 1 est une vue en perspective d'un brûleur selon l'invention ;
- la figure 2 est une vue en coupe du brûleur de la figure 1 ;
- la figure 3 est une vue en perspective schématique d'une variante de forme du brûleur de la figure 1 destiné à être logé dans un dispositif de fibrage par centrifugation externe ;
- la figure 4 est une vue en coupe d'une autre variante de forme, selon une configuration annulaire, d'un brûleur selon l'invention avec plusieurs rangées de dispositifs de combustion;
- la figure 5 est une autre vue en coupe schématique du brûleur annulaire de la figure 4 ;
- les figures 6a et 6b sont des vues en coupe de deux variantes respectives de dispositifs de combustion faisant partie du brûleur de l'invention ;
- les figures 7a et 7b sont des vues en coupe et de dessus de la face de combustion, respectivement, des dispositifs des figures 6a et 6b ;
- la figure 8 illustre une vue partielle schématique en coupe d'un dispositif de fabrication de laine de roche intégrant le brûleur de la figure 1 ;
- la figure 9 illustre une vue schématique partielle d'un dispositif de fabrication de laine de verre intégrant le brûleur de la figure 4.

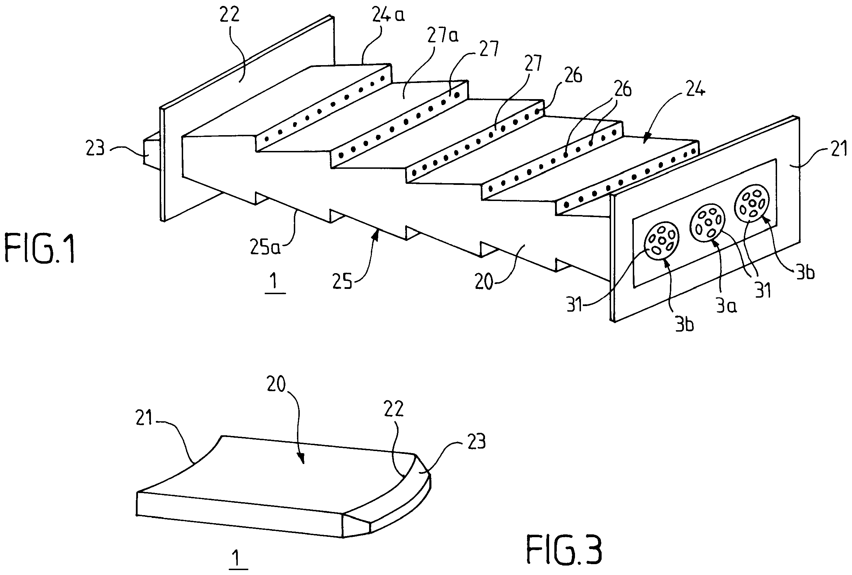

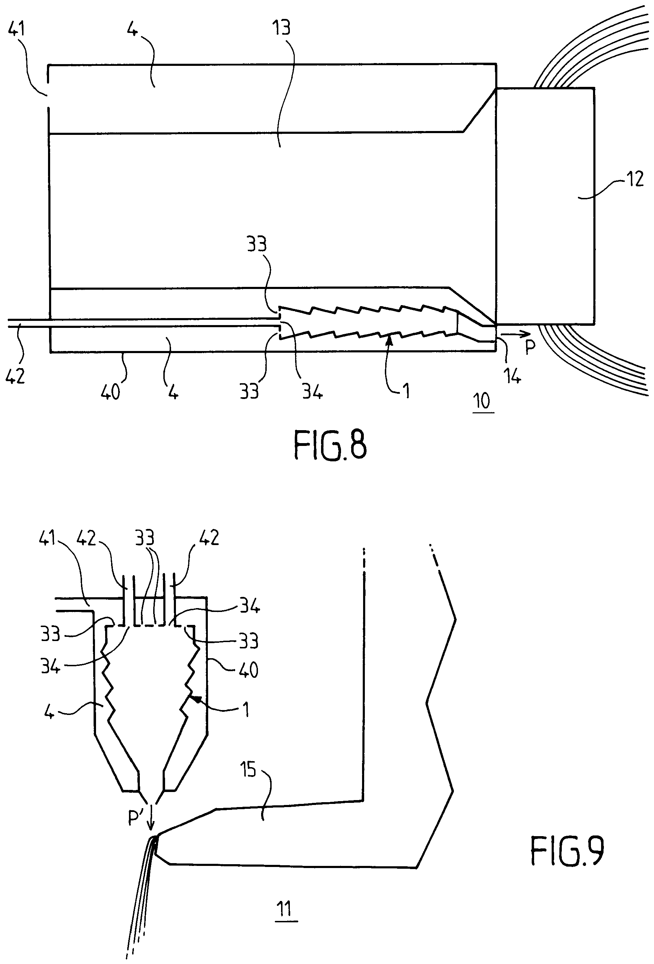

Le brûleur à combustion interne 1 illustré sur les figures 1 à 3 est destiné à être utilisé dans une installation de fabrication de laine minérale, telle qu'une installation de fabrication de laine de roche illustrée en partie sur la figure 8 et comprenant un dispositif d'étirage 10 des fibres par centrifugation externe.

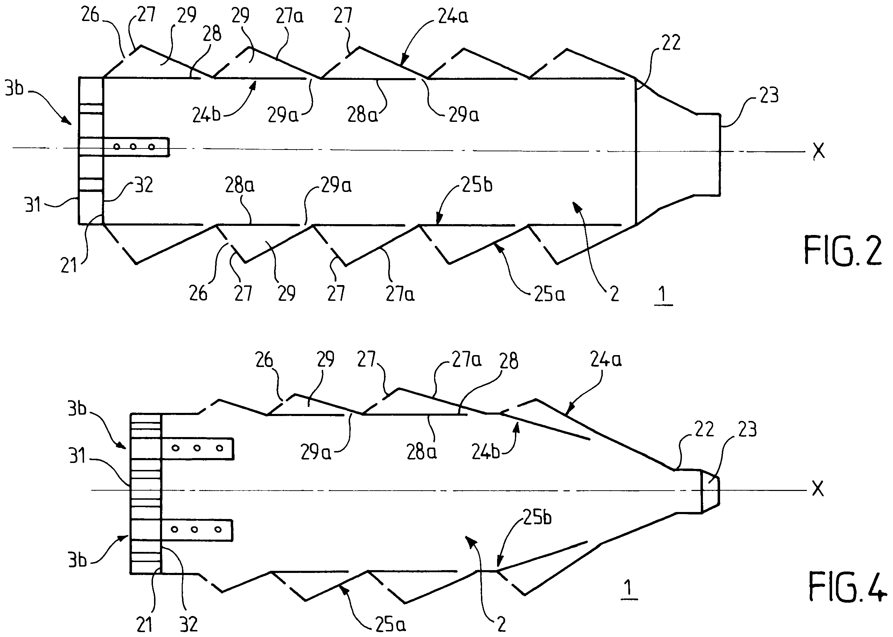

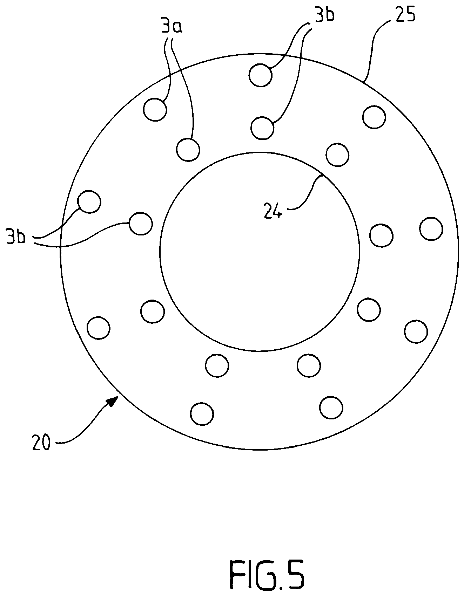

Le brûleur 1 illustré sur les figures 4 et 5 est destiné à être utilisé dans une installation de fabrication de laine minérale, telle que de la laine de verre, qui est illustrée en partie sur la figure 9 et comprend un dispositif d'étirage 11 des fibres par centrifugation interne.

Le brûleur de l'invention est destiné, pour son fonctionnement, à être enfermé dans un espace fermé hermétiquement et rempli d'air sous pression. L'air doit servir au refroidissement du brûleur. Avantageusement, l'air sert également à l'alimentation en comburant du brûleur.

Tel qu'illustré sur les figures 1 à 5, le brûleur 1 de l'invention comporte une chambre de combustion 2 et une pluralité de dispositifs de combustion 3a et/ou 3b à partir desquels sont engendrées des flammes pour générer des gaz de combustion.

La chambre de combustion 2 présente une enveloppe 20 pourvue de deux extrémités opposées, une extrémité 21 d'alimentation en comburant et combustible et une extrémité 22 d'échappement des gaz de combustion. L'enveloppe est de préférence métallique, constituée par de la tôle de 1 mm d'épaisseur par exemple. Plus l'épaisseur de l'enveloppe est importante, plus il sera difficile de la refroidir.

Le brûleur de la figure 1 dont une vue en coupe est donnée sur la figure 2 présente une enveloppe sensiblement parallélépipédique de façon à être agencé dans un dispositif par centrifugation externe.

La figure 3 illustre une vue schématique d'une variante de la figure 1, dont l'enveloppe est de forme générale sensiblement parallélépipédique et dont les extrémités 21 et 22 sont en arc de cercle. Cette forme permet de loger le brûleur dans l'espace actuel d'un système délivrant un courant gazeux d'un dispositif par centrifugation externe standard.

La vue en coupe de la figure 4 illustre l'enveloppe 20 d'un brûleur. Sa forme annulaire (vue en coupe de la figure 5) permet de la loger dans un dispositif par centrifugation interne.

Les dispositifs de combustion 3a, 3b sont situés à l'une des extrémités 21 de la chambre de combustion et ferment celle-ci. Sur la figure 1, sont visibles les faces arrières 31 des dispositifs de combustion qui sont opposées aux faces de combustion 32, internes à la chambre.

L'extrémité opposée d'échappement 22 de la chambre combustion est ouverte pour laisser s'échapper les gaz de combustion. La chambre s'étend sur une certaine longueur, telle que déjà connue, pour fournir le volume nécessaire à la combustion.

Au niveau de l'extrémité d'échappement 22 et à l'extérieur de la chambre est préférentiellement agencé un nez 23 qui aide à diriger les gaz de combustion s'échappant de la chambre.

L'enveloppe 20 présente deux parois opposées 24 et 25 qui s'étendent selon les plus grandes extensions de la chambre et qui relient les deux extrémités 21 et 22. Ces parois sont pourvues dans leur épaisseur d'une multiplicité d'orifices traversants 26 qui servent, comme nous le verrons par la suite, au refroidissement de la chambre de combustion 2.

Les faces externes 24a et 25a des parois ne sont pas planes, elles présentent une pluralité de décrochements 27 qui s'étendent selon la largeur de chaque paroi pour l'enveloppe parallélépipédique (figure 1 ou 2), ou selon tout le périmètre de chaque paroi pour l'enveloppe annulaire (figure 4). Ces décrochements confèrent aux faces externes une série de paliers 27a qui présentent une configuration en épi et symétrique par rapport à l'axe longitudinal de symétrie X du brûleur. L'obliquité des paliers 27a entre chaque décrochement est en direction de l'axe X et de l'extrémité d'échappement 22.

Les orifices 26 sont percés au niveau des décrochements 27.

Les faces internes 24b et 25b à l'intérieur de la chambre 2 comportent une succession de lamelles 28 qui sont rendues solidaires par l'une de leurs extrémités et sont en regard des décrochements 27 et des paliers 27a. Ces lamelles laissent place à des cavités 29 dans lesquelles débouchent les orifices 26.

L'extrémité des lamelles, opposée à celle de fixation aux faces internes de la chambre, est libre, ce qui fournit, entre lesdites lamelles et les faces internes des parois, et en sortie de la cavité 29, de minces fentes de guidage 29a.

Les orifices 26, les cavités 29 et les fentes de guidage 29a forment ainsi un système de refroidissement pour les parois 24 et 25 de la chambre de combustion à l'intérieur de laquelle la chaleur est destinée à se propager en raison de la combustion.

De l'air sous pression est destiné à s'engouffrer dans les cavités 29 via les orifices 26, à former des turbulences dans les cavités en raison de la présence des lamelles 28 qui servent de déflecteurs, et à s'échapper par les fentes de guidage 29a pour lécher l'intérieur 24b, 25b des parois de la chambre formé en plus grande partie par les faces 28a des lamelles 28.

L'air présent dans les cavités assure le refroidissement des lamelles 28 dont les faces 28a sont en contact direct avec la combustion.

Les lamelles 28 présentent une orientation adaptée, ici sensiblement parallèle à l'axe X, pour que l'air sortant des fentes 29a soit orienté selon un flux parallèle aux faces internes 24b, 25b des parois, pour les refroidir.

D'une part, l'air frôlant les parois de la chambre s'oppose aux gaz chauds de la combustion remplissant le volume intérieur de la chambre de sorte que les parois de la chambre sont protégées contre une surchauffe. D'autre part, l'air ingéré à proximité des dispositifs de combustion 3a et 3b participe à la combustion en fournissant un comburant complémentaire. Enfin, en aval des flammes des dispositifs de combustion, l'air ingéré permet de refroidir les gaz de combustion qui s'échappent à une température pouvant aller jusqu'à 1700°C.

L'air arrivant par les orifices 26 est de l'air sous pression qui est fourni par un agencement adéquat du brûleur 1 dans le dispositif auquel il est destiné. Cet agencement sera décrit ultérieurement en regard des figures 8 et 9.

Décrivons à présent les dispositifs de combustion.

Le nombre et l'agencement des dispositifs de combustion sont adaptés selon l'utilisation qui est faite du brûleur, soit à destination d'un procédé par centrifugation externe, soit d'un procédé par centrifugation interne.

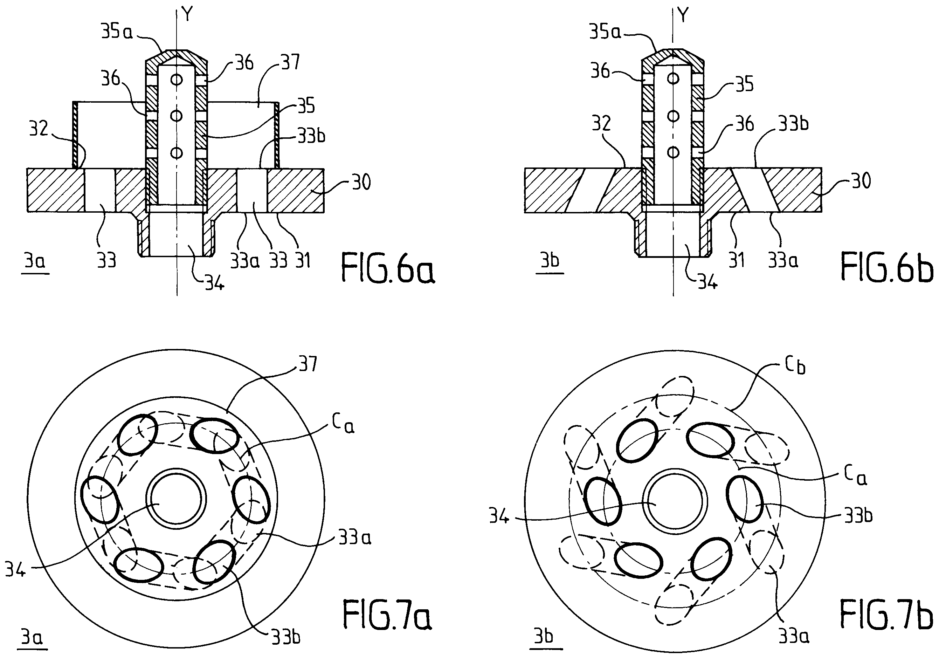

Deux variantes respectives de réalisation des dispositifs de combustion 3a et 3b sont données en référence aux figures 6a, 7a, et respectivement 6b, 7b. Ces deux variantes respectives correspondent à deux natures distinctes de flamme.

Il est important pour le fonctionnement du brûleur d'avoir dans sa configuration au moins un dispositif de combustion de chaque variante.

Chaque dispositif 3a et 3b est une pièce en métal qui comprend en commun un corps plein 30 présentant une première face 31, et une seconde face 32 opposée à la première et destinée à être en regard de la combustion.

Le corps est traversé dans son épaisseur et d'une face à l'autre, par plusieurs conduits d'alimentation en comburant 33 et d'un conduit d'alimentation en combustible 34 cylindrique, d'axe Y perpendiculaire aux faces 31 et 32 du corps. Les conduits sont usinés dans la masse du corps 30.

Le conduit d'alimentation en combustible 34 est disposé de manière centrale vis-à-vis des conduits d'alimentation en comburant 33.

Le conduit 34 présente par ailleurs un prolongement 35 cylindrique et creux qui fait saillie par rapport à la seconde face 32 du corps et aux conduits d'alimentation en comburant 33. Il est par exemple rapporté par soudage contre la face 32 du corps 30, ou par vissage dans la paroi du conduit 33.

Le prolongement 35 est fermé à son extrémité libre 35a qui est opposée à la face 32. De plus, il est pourvu dans sa paroi d'une multiplicité d'orifices 36 par lesquels est destiné à s'échapper le combustible.

Le conduit 34 est destiné à être raccordé de manière étanche et au niveau de la face 31 à un tuyau d'alimentation en combustible, tandis que les conduits d'alimentation 33 sont destinés à recevoir de l'air sous pression qui s'engouffre au niveau de la face 31 par les entrées 33a et ressort par les sorties 33b au niveau de la face 32.

Les conduits 33 sont destinés, au niveau des entrées 33a, à être directement mis en connexion au niveau de la face 31 avec une cavité qui comprend un comburant sous pression (mode préférentiel d'alimentation), ou à être connectés à des tuyaux d'alimentation en comburant sous pression.

Le combustible sous forme gazeuse, qui est destiné à être introduit dans le conduit 34, poursuit son chemin dans le prolongement 35 pour s'échapper par les orifices 36 selon des jets sensiblement perpendiculaires à l'axe Y. Les jets du combustible sont destinés à se mélanger au comburant, tel que de l'air par exemple, issu des conduits 33, et sous l'effet d'une étincelle, la combinaison du combustible et du comburant engendre une flamme et sa combustion.

La variante 3a du dispositif se différentie de celle 3b en ce que le corps 30 comporte en outre un rempart périphérique 37, de préférence de forme annulaire, en saillie par rapport à la seconde face 32 du corps et encadrant les sorties 33b des conduits d'alimentation en comburant.

Le rempart est formé d'une seule pièce mais pourrait tout aussi bien être constitué d'une pluralité de flasques jointifs ou non. Sa fonction est d'assurer le confinement du comburant dans la zone d'échappement du combustible.

Les figures 7a et 7b sont des vues de dessus des dispositifs, les traits continus correspondent à la face visible 32 de combustion, tandis que les traits discontinus correspondent à la face opposée 31. On voit que les conduits d'alimentation en comburant 33 de forme cylindrique présentent des entrées 33a et des sorties 33b de sections identiques en forme et en dimension.

Les dispositifs de combustion 3a et 3b se distinguent en revanche par l'inclinaison des conduits d'alimentation 33 en comburant par rapport au conduit central de combustible 34.

Pour un dispositif de combustion 3a (figure 7a), les entrées 33a ainsi que les sorties 33b sont disposées de manière circulaire autour du conduit central 34, et sont respectivement agencées selon des cercles (référence Cₐ en traits discontinus) de diamètres identiques au niveau de la face arrière 31, et respectivement de la face avant 32 de combustion.

De plus, les conduits 33 présentent des axes inclinés par rapport à l'axe Y du conduit central 34 de sorte que les entrées 33a et les sorties 33 b ne sont pas exactement en regard. Cette inclinaison assure d'obtenir en sortie de la face de combustion 32 un courant d'air rotatif et de forme symétrique autour de l'axe Y.

Enfin, le rempart 37 canalise l'air sortant des conduits 33 pour s'échapper sous forme d'un tourbillon cylindrique.

Le dispositif 3a permet par sa configuration d'engendrer une flamme longue et stable.

Pour le dispositif de combustion 3b (figure 7b), les conduits d'alimentation 33 sont également inclinés par rapport à l'axe Y, mais les entrées 33a des conduits d'alimentation en comburant 33 sont agencées de manière circulaire selon un cercle (référence C_{b} en traits discontinus) de diamètre supérieur au cercle (référence Cₐ en traits discontinus) que suivent les sorties 33b.

Cette disposition des conduits 33 engendre au niveau de la face 32 un tourbillon d'air rotatif autour de l'axe Y qui présente une forme serrée à la base au niveau de la face 32 pour s'évaser en s'éloignant de la face 32, à la manière d'un vortex de cyclone.

Le dispositif 3b permet par sa configuration d'engendrer une flamme plus forte mais moins stable que celle de l'autre dispositif 3a.

Lorsque les dispositifs de combustion 3a et 3b sont disposés de manière sensiblement alignée pour constituer le brûleur sensiblement parallélépipédique de la figure 1, ils sont par exemple au nombre de trois.

Avantageusement, on agence un dispositif 3a à tourbillon d'air cylindrique au centre de deux dispositifs 3b à tourbillon d'air cyclonique. En effet, après allumage des brûleurs au moyen par exemple d'une bougie, le brûleur 3a qui présente une flamme molle mais stable assure continuellement l'allumage des dispositifs 3b qui ont tendance à s'éteindre aux régimes critiques de basses température et pression notamment entre 300 et 500°C avec une pression de l'ordre de 100 mmCE) et de fortes température et pression (notamment à 1700°C et entre 500 et 600 mmCE).

Dans un brûleur annulaire de la figure 4, les dispositifs de combustion 3a et 3b sont par exemple au nombre d'une dizaine et mis en alternance de manière circulaire (figure 5).

La température des gaz de combustion délivrés par le brûleur de l'invention va jusqu'à 1700°C. La vitesse des gaz de combustion est adaptée selon le régime de combustion voulu à partir des proportions du mélange comburant-combustible et des débits imposés d'alimentation.

Nous allons enfin décrire l'alimentation du brûleur en comburant et en combustible et son refroidissement lorsqu'il est logé dans le dispositif auquel il est destiné.

La figure 8 illustre une vue partielle en coupe d'une installation de fibrage de laine de roche de forme standard comprenant un dispositif d'étirage 10 des fibres par centrifugation externe.

Le dispositif d'étirage 10 comporte des roues de centrifugation dont une en référence 12 est visible sur la figure 8. Cette roue est mue par un arbre rotatif 13. Elle comprend autour d'elle, en particulier sur une circonférence de 120 à 300° une lèvre d'étirage 14 depuis laquelle soufflent les gaz d'étirage.

L'installation comporte une pluralité de brûleurs 1 selon l'invention correspondant à celui de la figure 3 et dont un seul est visible sur la vue en coupe de la figure 8. Les brûleurs sont par exemple au nombre de trois répartis autour de la roue 12 de manière à alimenter en gaz chauds toute la lèvre d'étirage 14. De préférence, on répartira les brûleurs autour au moins de la roue qui génère, dans une installation standard, le plus de matière infibrée.

Le brûleur est avantageusement logé dans l'espace libre, dont la hauteur ne dépasse pas 5 cm, fourni entre la paroi de l'arbre rotatif 13 et le carter du dispositif.

Les gaz de combustion s'échappant du brûleur 1 sont émis perpendiculairement au plan de rotation de la roue 12, selon la direction P. La matière fondue à fibrer est déversée sur la bande périphérique de la roue, s'en détache par la rotation de la roue et est étirée grâce aux courants gazeux s'échappant du brûleur 1 et de la lèvre d'étirage 14.

La figure 9 illustre l'autre forme annulaire de brûleur 1 selon l'invention pour le procédé par centrifugation interne. Le dispositif de fibrage 11 comporte un centrifugeur 15, nommé encore assiette de fibrage, dans lequel se déverse la matière fondue à fibrer. Par la force centrifuge donnée à l'assiette, la matière s'échappe sous forme de filaments au travers d'orifices dont est dotée la paroi périphérique de l'assiette. Les filaments sont à leur tour étirés sous forme de fibres au moyen des gaz d'un brûleur annulaire 1, tel que celui de la figure 4, qui sont dirigés sensiblement tangentiellement selon P' à la direction des filaments.

Le brûleur 1 pour chacune des installations des figures 8 et 9 est disposé dans un espace fermé 4 qu'on alimente en air sous pression pour fournir avantageusement du comburant les dispositifs 3a et 3b et fournir le refroidissement aux parois du brûleur.

L'espace 4 est constitué d'une enveloppe hermétique 40, par exemple en métal, délimitée en particulier sur la figure 8 par la tôle métallique du carter et la paroi de l'arbre 13. L'enveloppe est pourvue d'au moins une entrée 41 d'alimentation en air.

Des tuyaux d'alimentation 42 en combustible tel que du gaz pour les dispositifs de combustion 3a et 3b traversent de manière étanche l'enveloppe 40 et sont connectés aux conduits d'alimentation 34.

De manière préférée, les conduits d'alimentation 33 en comburant des dispositifs de combustion sont donc directement alimentés par l'air sous pression se trouvant dans l'espace 4.

Enfin, l'air remplissant l'espace 4 s'engouffre au travers des orifices 26 situés dans les parois du brûleur pour leur refroidissement comme déjà expliqué précédemment.

Ainsi, le brûleur de l'invention autorise quelque soit sa destination et dans un faible encombrement, une combustion complète dans sa chambre de combustion et un refroidissement de ses parois grâce, à la pluralité des dispositifs de combustion dont au moins une combinaison de chaque variante est utilisée, à la petite taille des dispositifs de combustion, ainsi qu'à la perforation et au profil adapté des parois du brûleur.

## Revendications

1. Brûleur à combustion interne (1) pour installation de fibrage, ledit brûleur étant capable de générer des gaz de combustion en direction de la matière à fibrer projetée par centrifugation externe ou interne pour l'étirer en fibres, ledit brûleur comportant une chambre de combustion (2) alimentée en combustible et en comburant, la chambre comportant une enveloppe (20) pourvue d'une première extrémité (21) fermée et d'une seconde extrémité opposée d'échappement (22) ouverte par laquelle s'échappent les gaz de combustion, l'enveloppe (20) présentant au moins deux parois opposées (24, 25) qui relient les deux extrémités (21, 22), **caractérisé en ce que** le brûleur comporte dans la chambre (2) et au niveau de la première extrémité fermée (21), au moins deux dispositifs de combustion (3a, 3b) alimentés en comburant et en combustible qui sont distincts en configuration de manière à engendrer respectivement deux types distincts de flammes, et **en ce qu'**il est doté d'un système de refroidissement de ses parois (24, 25) par introduction d'un gaz de refroidissement le long de ses parois.

2. Brûleur selon la revendication 1, **caractérisé en ce que** le système de refroidissement comprend une multitudes d'orifices (26) traversants les parois (24, 25) et par lesquels de l'air est destiné à s'engouffrer, et des lamelles de déflexion (28) internes à la chambre de combustion (2) et ménageant chacune, d'une part, une cavité (29) qui est en regard de plusieurs orifices (26) et est destinée à recevoir l'air en provenance desdits orifices, et d'autre part, une fente de guidage (29a) qui est destinée à conduire l'air de la cavité vers l'intérieur de la chambre (2).

3. Brûleur selon l'une quelconque des revendications précédentes, **caractérisé en ce que** les parois (24, 25) de la chambre présentent sur leur face externe (24a, 25a), à l'extérieur de la chambre à combustion, une pluralité de décrochements (27) qui s'étendent selon la plus petite extension de la paroi et au niveau desquels sont agencés les orifices traversants (26).

4. Brûleur selon la revendication 3, **caractérisé en ce que** sont ménagés entre les décrochements (27), des paliers (27a) qui présentent une configuration en épi et dont l'obliquité est en direction de l'extrémité d'échappement (22) du brûleur.

5. Brûleur selon la revendication 2, **caractérisé en ce que** lamelles de déflexion (28) présentent une orientation parallèle aux faces internes (24b, 25b) des parois (24, 25) de la chambre de sorte que l'air issu des fentes de guidage (29a) présente un flux directionnel sensiblement parallèle aux faces internes (24b, 25b) des parois (24, 25) de la chambre en regard de la combustion.

6. Brûleur selon l'une quelconque des revendications précédentes, **caractérisé en ce que** chaque dispositif de combustion (3a, 3b) comprend un corps (30) qui présente une première face (31) et une seconde face (32) opposée à la première et en regard de la combustion, le corps (30) étant traversé dans son épaisseur et d'une face à l'autre par plusieurs conduits d'alimentation en comburant (33) et d'un conduit d'alimentation en combustible (34) d'axe (Y) perpendiculaire aux faces (31, 32) du corps, le conduit d'alimentation en combustible (34) étant disposé de manière centrale vis-à-vis des conduits d'alimentation en comburant (33) et comprenant un prolongement (35) faisant saillie par rapport à la seconde face (32) du corps et aux conduits d'alimentation en comburant (33), la partie en saillie étant pourvue d'une pluralité d'orifices (36).

7. Brûleur selon la revendication 6, **caractérisé en ce que** le corps (30) comporte un rempart périphérique (37) qui fait saillie par rapport à la seconde face (32) du corps de manière à encadrer en partie ou totalement les sorties (33b) des conduits d'alimentation en comburant.

8. Brûleur selon la revendication 6 ou 7, **caractérisé en ce que** pour l'un des dispositifs de combustion (3a), les conduits (33) sont inclinés par rapport à l'axe Y du conduit central (34) et chaque conduit d'alimentation en comburant (33) comporte une entrée (33a) au niveau de la première face du corps du dispositif et une sortie (33b) débouchant au niveau de la surface de la deuxième face (32) du corps du dispositif, les entrées (33a) et les sorties (33b) des conduits étant agencées selon des cercles de diamètre identique autour du conduit d'alimentation en comburant (34).

9. Brûleur selon la revendication 6, **caractérisé en ce que** pour l'un des dispositifs de combustion (3b), les conduits d'alimentation en comburant (33) sont inclinés par rapport à l'axe (Y) du conduit central d'alimentation en combustible (34), et chaque conduit (33) comporte une entrée (33a) au niveau de la première face du corps du dispositif et une sortie (33b) débouchant au niveau de la surface de la deuxième face (32) du corps du dispositif, les entrées (33a) et les sorties (33b) des conduits étant agencées selon des cercles de diamètre différent autour du conduit d'alimentation en comburant (34), le cercle formé par les sorties (33b) étant de diamètre plus petit.

10. Brûleur selon l'une quelconque des revendications précédentes, **caractérisé en ce que** les dispositifs de combustion (3a, 3b) sont disposés de manière sensiblement linéaire pour une enveloppe (20) de brûleur qui est de forme sensiblement parallélépipédique, ou sont disposés de manière circulaire pour une enveloppe (20) de brûleur qui est de forme annulaire.

11. Brûleur selon l'une quelconque des revendications précédentes, **caractérisé en ce que** la chambre de combustion (2) est alimentée en combustible et en comburant, le comburant étant formé d'air sous pression, et le combustible étant constitué d'un gaz ou d'un mélange de gaz.

12. Brûleur selon l'une quelconque des revendications précédentes, **caractérisé en ce que** les parois (24, 25) sont espacées d'au plus 5 cm.

13. Brûleur selon l'une quelconque des revendications précédentes, **caractérisé en ce que** l'enveloppe (20) est métallique.

14. Installation de fibrage, équipée d'un ou plusieurs brûleurs selon l'une quelconque des revendications précédentes.

15. Installation de fibrage selon la revendication 14, **caractérisée en ce que** l'installation est une installation de fibrage de laine minérale, en particulier de roche ou de verre.

16. Installation de fibrage selon la revendication 14, **caractérisée en ce que** le brûleur est agencé dans un espace fermé (4) constitué par une enveloppe hermétique (40) qui comporte au moins une entrée d'alimentation d'air sous pression (41) et est traversée par des tuyaux d'alimentation en combustible (42) connectés aux dispositifs de combustion (3a, 3b).

17. Procédé de fabrication de laine minérale par un dispositif de centrifugation externe ou interne, en particulier de forme standard, **caractérisé en ce qu'**il utilise au moins un brûleur (1) selon l'une quelconque des revendications 1 à 13.

18. Procédé selon la revendication 17, **caractérisé en ce que** l'on produit à l'intérieur du brûleur un premier type de flamme instable à certains régimes, et un deuxième type de flamme assurant un allumage permanent du premier type de flamme.

19. Procédé selon la revendication 17 ou 18, **caractérisé en ce que** l'on fournit un gaz de refroidissement constitué par de l'air sous pression pour refroidir les parois du brûleur.

## Patentansprüche

1. Brenner mit innerer Verbrennung (1) für Zerfaserungsanlage, wobei der Brenner imstande ist, Verbrennungsgase in Richtung des zu zerfasernden Materials zu erzeugen, das durch externe oder interne Zentrifugierung projiziert wird, um es zu Fasern zu ziehen, wobei der Brenner eine Brennkammer (2) umfasst, die mit Brennstoff und mit Sauerstoffträger versorgt wird, wobei die Kammer eine Umhüllung (20) umfasst, die mit einem ersten geschlossenen Ende (21) und einem zweiten entgegengesetzten offenen Abgasende (22) versehen ist, durch das die Verbrennungsgase entweichen, wobei die Umhüllung (20) mindestens zwei entgegengesetzte Wände (24, 25) aufweist, die die zwei Enden (21, 22) verbinden, **dadurch gekennzeichnet, dass** der Brenner in der Kammer (2) im Bereich des ersten geschlossenen Endes (21) mindestens zwei Verbrennungsvorrichtungen (3a, 3b) umfasst, die mit Sauerstoffträger und mit Brennstoff versorgt werden, deren Konfiguration verschieden ist, um jeweils zwei verschiedene Arten von Flammen zu erzeugen, und dadurch, dass er mit einem Kühlsystem seiner Wände (24, 25) durch Einleiten eines Kühlgases entlang seiner Wände versehen ist.

2. Brenner nach Anspruch 1, **dadurch gekennzeichnet, dass** das Kühlsystem eine Vielzahl von Öffnungen (26) umfasst, die die Wände (24, 25) durchqueren und durch die Luft bestimmt ist, einzuströmen, und Ablenklamellen (28) im Inneren der Brennkammer (2), und die jeweils einerseits einen Hohlraum (29), der sich gegenüber mehreren Öffnungen (26) befindet und bestimmt ist, Luft aufzunehmen, die aus den Öffnungen stammt, und andererseits einen Führungsschlitz (29a), der bestimmt ist, Luft vom Hohlraum hin zum Inneren der Kammer (2) zu leiten, ausbilden.

3. Brenner nach einem der vorhergehenden Ansprüche, **dadurch gekennzeichnet, dass** die Wände (24, 25) der Kammer auf ihrer äußeren Seite (24a, 25a), außerhalb der Brennkammer, eine Vielzahl von von Ausbuchtungen (27) aufweisen, die sich entlang der kleinesten Ausdehnung der Wand erstrecken, und in deren Bereich die querenden Öffnungen (26) angeordnet sind.

4. Brenner nach Anspruch 3, **dadurch gekennzeichnet, dass** zwischen den Ausbuchtungen (27) Absätze (27a) ausgebildet sind, die eine Ährenkonfiguration aufweisen, und deren Schräge in Richtung des Abgasendes (22) des Brenners ist.

5. Brenner nach Anspruch 2, **dadurch gekennzeichnet, dass** Ablenklamellen (28) eine parallele Ausrichtung zu den inneren Seiten (24b, 25b) der Wände (24, 25) der Kammer aufweisen, so dass die Luft, die aus den Führungsschlitzen (29a) stammt, einen Richtungsfluss aufweist, der im Wesentlichen parallel zu den inneren Seiten (24b, 25b) der Wände (24, 25) der Kammer gegenüber der Verbrennung ist.

6. Brenner nach einem der vorhergehenden Ansprüche, **dadurch gekennzeichnet, dass** jede Verbrennungsvorrichtung (3a, 3b) einen Körper (30) umfasst, der eine erste Seite (31) und eine zweite Seite (32) entgegengesetzt der ersten Seite und gegenüber der Verbrennung aufweist, wobei der Körper (30) in seiner Dicke und von einer Seite zur anderen von mehreren Versorgungskanälen mit Sauerstoffträger (33) und von einem Versorgungskanal mit Brennstoff (34) mit einer Achse (Y) senkrecht zu den Seiten (31, 32) des Körpers gequert wird, wobei der Versorgungskanal mit Brennstoff (34) zentral gegenüber den Versorgungskanälen mit Sauerstoffträger (33) angeordnet ist und eine Verlängerung (35) umfasst, die mit Bezug auf die zweite Seite (32) des Körpers und zu den Versorgungskanälen mit Sauerstoffträger (33) vorspringt, wobei der vorspringende Teil mit einer Vielzahl von Öffnungen (36) versehen ist.

7. Brenner nach Anspruch 6, **dadurch gekennzeichnet, dass** der Körper (30) einen Umfangswall (37) umfasst, der in Bezug auf die zweite Seite (32) des Körpers vorspringt, um die Ausgänge (33b) der Versorgungskanäle mit Sauerstoffträger teilweise oder vollständig zu umrahmen.

8. Brenner nach Anspruch 6 oder 7, **dadurch gekennzeichnet, dass** bei einer der Verbrennungsvorrichtungen (3a) die Kanäle (33) in Bezug auf die Achse Y des zentralen Kanals (34) geneigt sind und jeder Versorgungskanal mit Brennstoff (33) einen Eingang (33a) im Bereich der ersten Seite des Körpers der Vorrichtung und einen Ausgang (33b) umfasst, der im Bereich der Oberfläche der zweiten Seite (32) des Körpers der Vorrichtung ausmündet, wobei die Eingänge (33a) und die Ausgänge (33b) der Kanäle gemäß Kreisen mit identischem Durchmesser um den Versorgungskanal mit Sauerstoffträger (34) angeordnet sind.

9. Brenner nach Anspruch 6, **dadurch gekennzeichnet, dass** bei einer der Verbrennungsvorrichtungen (3b) die Versorgungskanäle mit Sauerstoffträger (33) in Bezug auf die Achse (Y) des zentralen Versorgungskanals mit Brennstoff (34) geneigt sind und jeder Kanal einen Eingang (33a) im Bereich der ersten Seite des Körpers der Vorrichtung und einen Ausgang (33b) umfasst, der im Bereich der Oberfläche der zweiten Seite (32) des Körpers der Vorrichtung ausmündet, wobei die Eingänge (33a) und die Ausgänge (33b) der Kanäle gemäß Kreisen mit verschiedenem Durchmesser um den Versorgungskanal mit Sauerstoffträger (34) angeordnet sind, wobei der Kreis, gebildet aus den Ausgängen (33b), kleineren Durchmessers ist.

10. Brenner nach einem der vorhergehenden Ansprüche, **dadurch gekennzeichnet, dass** die Verbrennungsvorrichtungen (3a, 3b) bei einer Umhüllung (20) des Brenners , die eine etwa parallelepipede Form aufweist, etwa linear angeordnet sind, oder bei einer Umhüllung (20) des Brenners, die ringförmig ist, rund angeordnet sind.

11. Brenner nach einem der vorhergehenden Ansprüche, **dadurch gekennzeichnet, dass** die Brennkammer (2) mit Brennstoff und mit Sauerstoffträger versorgt wird, wobei der Sauerstoffträger aus Druckluft gebildet ist und der Brennstoff aus einem Gas oder einem Gasgemisch besteht.

12. Brenner nach einem der vorhergehenden Ansprüche, **dadurch gekennzeichnet, dass** die Wände (24, 25) um höchstens 5 cm beabstandet sind.

13. Brenner nach einem der vorhergehenden Ansprüche, **dadurch gekennzeichnet, dass** die Umhüllung (20) metallisch ist.

14. Zerfaserungsanlage, ausgestattet mit einem oder mehreren Brennern nach einem der vorhergehenden Ansprüche.

15. Zerfaserungsanlage nach Anspruch 14, **dadurch gekennzeichnet, dass** die Anlage eine Anlage zur Zerfaserung von Mineralwolle, insbesondere von Stein- oder Glaswolle, ist.

16. Zerfaserungsanlage nach Anspruch 14, **dadurch gekennzeichnet, dass** der Brenner in einem geschlossenen Raum (4) angeordnet ist, der aus einer hermetischen Umhüllung (40) besteht, die mindestens einen Eingang zur Versorgung mit Druckluft (41) umfasst und von zwei Rohren zur Versorgung mit Brennstoff (42) gequert wird, die mit den Verbrennungsvorrichtungen (3a, 3b) verbunden sind.

17. Verfahren zur Herstellung von Mineralwolle durch eine Vorrichtung zur externen oder internen Zentrifugierung, insbesondere in Standardform, **dadurch gekennzeichnet, dass** es mindestens einen Brenner (1) nach einem der Ansprüche 1 bis 13 verwendet.

18. Verfahren nach Anspruch 17, **dadurch gekennzeichnet, dass** im Inneren des Brenners eine erste Flammenart erzeugt wird, die in bestimmten Betriebsarten instabil ist, und eine zweite Flammenart, die ein permanentes Anzünden der ersten Flammenart sicherstellt.

19. Verfahren nach Anspruch 17 oder 18, **dadurch gekennzeichnet, dass** ein Kühlgas geliefert wird, das aus Druckluft besteht, um die Wände des Brenners zu kühlen.

## Claims

1. Internal combustion burner (1) for a fiberizing installation, said burner being able to generate combustion gases towards the material for fiberizing ejected by external or internal centrifugation for drawning it into fibers, said burner comprising a combustion chamber (2) supplied with fuel and with oxidant, the chamber comprising a casing (20) provided with a first end (21) which is closed and with an opposite exhaust second end (22) which is open and via which the combustion gases escape, the casing (20) having at least two opposite walls (24, 25) connecting the two ends (21, 22), **characterized in that** the burner comprises in the chamber (2) and at the closed first end (21), at least two combustion devices (3a, 3b) supplied with oxidant and with fuel which are configured differently so as respectively to generate two distinct types of flame, and **in that** it is equipped with a system for cooling its walls (24, 25) by introducing a cooling gas along its walls.

2. Burner according to Claim 1, **characterized in that** the cooling system comprises a multitude of through-holes (26) passing through the walls (24, 25) and through which air is intended to rush, and deflecting strips (28) internal to the combustion chamber (2) and each forming, on the one hand, a cavity (29) which faces several holes (26) and is intended to receive the air from the said holes and, on the other hand, a guide slot (29a) which is intended to lead the air from the cavity towards the inside of the chamber (2).

3. Burner according to any one of the preceding claims, **characterized in that** the walls (24, 25) of the chamber have, on their external face (24a, 25a), on the outside of the combustion chamber, a plurality of steps (27) which extend along the shortest side of the wall and in which the through-holes (26) are made.

4. Burner according to Claim 3, **characterized in that** formed between the steps (27) are landings (27a) configured in the manner of an ear of corn and which are angled towards the exhaust end (22) of the burner.

5. Burner according to Claim 2, **characterized in that** the deflecting strips (28) are orientated suitably so that the air from the guide slots (29a) displays a directional flow substantially parallel to the internal faces (24b, 25b) of the walls (24, 25) of the chamber on the combustion side.

6. Burner according to any one of the preceding claims, **characterized in that** each combustion device (3a, 3b) comprises a body (30) which has a first face (31) and a second face (32) opposite to the first and on the combustion side, the body (30) having passing through its thickness from one face to the other several oxidant supply ducts (33) and one fuel supply duct (34) of axis (Y) perpendicular to the faces (31, 32) of the body, the fuel supply duct (34) being positioned centrally with respect to the oxidant supply ducts (33) and comprising an extension (35) projecting beyond the second face (32) of the body and beyond the oxidant supply ducts (33), the projecting part being provided with a plurality of holes (36).

7. Burner according to Claim 6, **characterized in that** the body (30) comprises a peripheral surround (37) which projects beyond the second face (32) of the body so as partially or completely to encircle the outlets (33b) of the oxidant supply ducts.

8. Burner according to Claim 6 or 7, **characterized in that**, in the case of one of the combustion devices (3a), the ducts (33) are inclined with respect to the axis Y of the central duct (34) and each oxidant supply duct (33) has an inlet (33a) on the first face of the body of the device and an outlet (33b) opening onto the surface of the second face (32) of the body of the device, the inlets (33a) and the outlets (33b) of the ducts being arranged in circles of the same diameter around the oxidant supply duct (34).

9. Burner according to Claim 6, **characterized in that**, in the case of one of the combustion devices (3b), the oxidant supply ducts (33) are inclined with respect to the axis (Y) of the central fuel supply duct (34), and each duct (33) has an inlet (33a) on the first face of the body of the device and an outlet (33b) opening onto the surface of the second face (32) of the body of the device, the inlets (33a) and the outlets (33b) of the ducts being arranged in circles of different diameters about the oxidant supply duct (34), the circle formed by the outlets (33b) being of the smaller diameter.

10. Burner according to any one of the preceding claims, **characterized in that** the combustion devices (3a, 3b) are arranged substantially in a line in the case of a burner casing (20) of substantially parallelepipedal shape or are arranged in a circle in the case of a burner casing (20) of annular shape.

11. Burner according to any one of the preceding claims, **characterized in that** the oxidant is formed of pressurized air, while the fuel consists of a gas or a mixture of gases.

12. Burner according to any one of the preceding claims, **characterized in that** the walls (24, 25) are spaced at most 5 cm apart.

13. Burner according to any one of the preceding claims, **characterized in that** the casing (20) is made of metal.

14. Fiberizing installation equipped with one or more burners according to any one of the preceding claims.

15. Fiberizing installation according to Claim 14, **characterized in that** the fiberizing installation is an installation for fiberizing mineral wool, particularly rock wool or glass wool.

16. Fiberizing installation according to Claim 14 or 15, **characterized in that** the burner is arranged in an enclosed space (4) consisting of an airtight casing (40) which has at least one pressurized-air supply inlet (41) and has passing through it fuel supply pipes (42) which are connected to the combustion devices (3a, 3b).

17. Method of manufacturing mineral wool using a device employing an external or internal centrifugal process, particularly of standard form, **characterized in that** it uses at least one burner (1) according to any one of Claims 1 to 13.

18. Method according to Claim 17, **characterized in that** a first type of flame that is unstable at certain speeds and a second type of flame that ensures that the first type of flame remains constantly lit are produced inside the burner.

19. Method according to Claim 17 or 18, **characterized in that** a cooling gas consisting of pressurized air is provided for cooling the walls of the burner.
